(19) Europäisches Patentamt
European Patent Office
Office européen des brevets

(11) EP 2 899 989 A1

(12) **EUROPEAN PATENT APPLICATION**

(43) Date of publication:
**29.07.2015 Bulletin 2015/31**

(21) Application number: **15152737.1**

(22) Date of filing: **27.01.2015**

(51) Int Cl.:
***H04N 21/442*** (2011.01)
***H04H 60/64*** (2008.01)
***H04N 21/466*** (2011.01)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **27.01.2014 JP 2014012827**

(71) Applicant: **Kabushiki Kaisha Toshiba**
**Tokyo 105-8001 (JP)**

(72) Inventor: **Nakata, Kouta**
**Tokyo 105-8001 (JP)**

(74) Representative: **Granleese, Rhian Jane**
**Marks & Clerk LLP**
**90 Long Acre**
**London WC2E 9RA (GB)**

(54) **Data analysis apparatus, method and program**

(57) According to one embodiment, a data analysis apparatus (100) includes a first acquisition unit (101), a second acquisition unit (102), an analysis unit (103) and a totaling unit (104). The first acquisition unit (101) acquires, for each of a plurality of target contents, a content information item including a broadcast time of one of the target contents and information which relates to a broadcast channel on which the one of the target contents is broadcasted. The second acquisition unit (102) acquires viewing log information items each including an identification number, a viewing time and a viewing channel. The analysis unit (103) calculates a viewing state with the identification number for each of the target contents and obtains a viewing pattern. The totaling unit (104) totals the viewing pattern by the numbers of identification numbers.

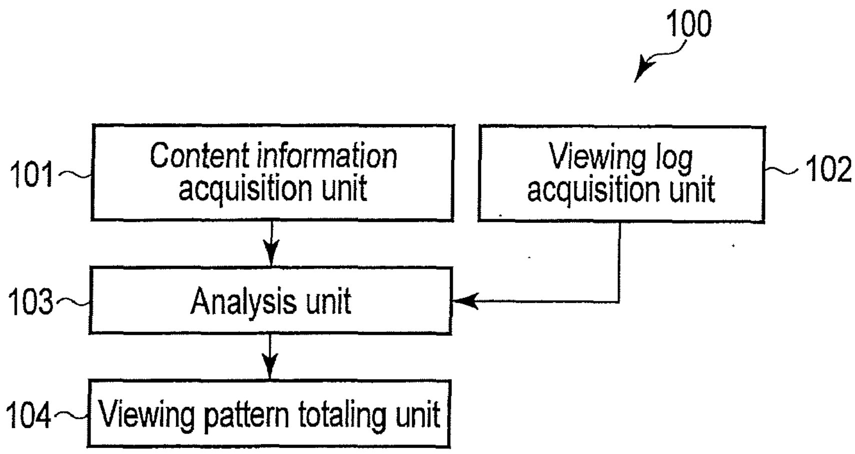


FIG. 1

EP 2 899 989 A1

**Description**

FIELD

Embodiments described herein relate generally to a data analysis apparatus, method and program.

BACKGROUND

It is possible to obtain a detailed viewing log for each viewer or device from a video viewing device such as a TV set connected to the Internet.

As a technique of analyzing such viewing logs, there is available a technique of calculating statistical values such as a viewing rate, a recording rate, and a skipping rate from viewing information, recorded program information, and playback information relating to TV broadcasting, which are obtained from users.

BRIEF DESCRIPTION OF THE DRAWINGS

FIG. 1 is a block diagram illustrating a data analysis apparatus;
FIG. 2 is a view illustrating an example of content information items;
FIG. 3 is a view illustrating an example of viewing log information items;
FIG. 4 is a flowchart illustrating the operation of the data analysis apparatus;
FIG. 5 is a block diagram illustrating the details of an analysis unit;
FIG. 6 is a flowchart illustrating the details of analysis processing in the analysis unit;
FIG. 7 is a flowchart illustrating viewing state calculation processing in a calculation processing unit;
FIG. 8 is a flowchart illustrating the details of update processing for a viewing time variable;
FIG. 9 is a view illustrating viewing log information items relating to a specific example of viewing state determination processing;
FIG. 10 is a view illustrating an example of calculated viewing states;
FIG. 11 is a view illustrating an example of a viewing pattern list;
FIG. 12 is a block diagram illustrating the details of a viewing pattern totaling unit;
FIG. 13 is a flowchart illustrating the details of totaling processing;
FIG. 14 is a flowchart illustrating calculation processing for an identification number count;
FIG. 15 is a view illustrating a specific example of viewing pattern totaling processing;
FIG. 16 is a view illustrating an example of the totaling result generated;
FIG. 17 is a view for explaining a totaling result relating to the first usage example;
FIG. 18 is a view expressing the totaling result shown in FIG. 16 in the form of a Venn diagram relating to the second usage example;
FIG. 19 is a view illustrating a target content relating to the second usage example;
FIG. 20 is a view illustrating the totaling result obtained by performing analysis processing for the target content in FIG. 19;
FIG. 21 is a view expressing the totaling result shown in FIG. 20 in the form of a Venn diagram;
FIG. 22 is a view illustrating a target content relating to the third usage example;
FIG. 23 is a view illustrating the totaling result obtained by performing analysis processing for the target content in FIG. 22;
FIG. 24 shows graphs of the totaling result in FIG. 23;
FIG. 25 is a view illustrating a target content relating to the fourth usage example;
FIG. 26 is a view illustrating another example of the target content relating to the fourth usage example;
FIG. 27 is a view illustrating an outflow/inflow analysis result expressing the totaling result in the fourth usage example by using arrows;
FIG. 28 is a view illustrating a target content relating to the fifth usage example;
FIG. 29 is a view illustrating the correspondence between viewing patterns and identification number relating to the fifth usage example; and
FIG. 30 is a view illustrating an example of specific viewer identification number.

DETAILED DESCRIPTION

The above technique can obtain information relating to a given program. It is difficult to analyze the relationship between a plurality of programs over a long period. For example, it is difficult to analyze how many times an individual watches a drama series or how an individual changes his or her favorite programs during a program renewal period.

In addition, with an increase in the degree of detail of viewing logs and an increase in the number of compatible devices, the data amounts of viewing logs have rapidly increased. In addition, a plurality of contents as analysis targets are not limited to TV programs and include TV commercials or TV program segments. There are increasing demands for analysis relating to a plurality of contents. It is therefore necessary to flexibly perform analysis in a short calculation time and at a low cost.

In general, according to one embodiment, a data analysis apparatus includes a first acquisition unit, a second acquisition unit, an analysis unit and a totaling unit. The first acquisition unit is configured to acquire, for each of a plurality of target contents, a content information item including a broadcast time of one of the target contents and information which relates to a broadcast channel on which the one of the target contents is broadcasted. The second acquisition unit is configured to acquire viewing log information items each including an identification number, a viewing time and a viewing channel, the identification number identifying a viewer or a device. The analysis unit is configured to calculate a viewing state with the identification number for each of the target contents by using the content information item and the viewing log information items, and obtain a viewing pattern indicating a combination of viewing states of the target contents, each of the viewing states indicating whether or not each of the target contents has been viewed. The totaling unit is configured to total the viewing pattern by the numbers of identification numbers.

A data analysis apparatus and method and a program according to this embodiment will be described below with reference to the accompanying drawings. Note that in the following embodiments, the same reference numerals denote components which operate in the same manners, and repetitive descriptions will be omitted as needed.

The data analysis apparatus according to this embodiment will be described with reference to the block diagram of FIG. 1.

A data analysis apparatus 100 according to the present embodiment includes a content information acquisition unit 101, a viewing log acquisition unit 102, an analysis unit 103, and a viewing pattern totaling unit 104.

The content information acquisition unit 101 acquires a content information item including information relating to a broadcast time and broadcast channel for each target content as an analysis target from, for example, an electric program guide (EPG). The details of content information items will be described later with reference to FIG. 2. Note that a target content is not limited to a TV program and includes a Commercial message and a program segment. If the target content is a commercial message, a broadcast time and channel information may be acquired as the content information item.

The viewing log acquisition unit 102 acquires viewing log information items including information relating to viewer or device identification number, viewing time, and a viewing channel from a viewing device such as a TV set via, for example, the Internet. The details of the viewing log information items will be described later with reference to FIG. 3.

The analysis unit 103 receives the content information items from the content information acquisition unit 101, and the viewing log information items from the viewing log acquisition unit 102. The analysis unit 103 obtains a viewing pattern by calculating the viewing states of a plurality of target contents for each type of identification number. A viewing state indicates whether or not the viewer has viewed the target content. A viewing pattern indicates a combination of the viewing states of a plurality of target contents.

The viewing pattern totaling unit 104 receives a viewing pattern for each type of identification number from the analysis unit 103, and totals the viewing patterns of a plurality of target contents and the numbers of identification numbers respectively corresponding to the same viewing patterns of the plurality of target contents, thereby obtaining a totaling result.

An example of the content information items acquired by the content information acquisition unit 101 will be described next with reference to FIG. 2.

As shown in FIG. 2, a content ID 201, a title 202, a broadcast start time 203, a broadcast end time 204, and a broadcast channel 205 are associated with each other and acquired as a content information item 206.

The content ID 201 is an identifier for uniquely identifying a content. The title 202 is the title name of the content. The broadcast start time 203 is the time when the broadcasting of the content starts. The broadcast end time 204 is the time when the broadcasting of the content ends. Note that the broadcast start time 203 and the broadcast end time 204 are also collectively called the broadcast time. The broadcast channel 205 is the channel on which the content is broadcasted. In the case of FIG. 2, the content information acquisition unit 101 acquires the content information items of two contents with the titles "drama A" and "drama B" as target contents.

Note that the content information item is not limited to the information shown in FIG. 2 and may further include information such as the genres of the contents and the names of actors appearing in the contents as content information item.

An example of the viewing log information items acquired by the viewing log acquisition unit 102 will be described next with reference to FIG. 3.

As shown in FIG. 3, identification number 301, a viewing start time 302, a viewing end time 303, and a viewing channel 304 are associated with each other and acquired as a viewing log information item 305. The identification number 301 is an identifier for uniquely identifying a viewer or device. The viewing start time 302 is the time when a viewing activity started on the device. The viewing end time 303 is the time when a viewing activity ended on the device. The viewing channel 304 is the channel selected by the device. Note that the viewing start time 302 and the viewing end time 303 are also collectively called the viewing time.

The viewing log information item 305 on each row represents one viewing activity. Assume that in the present embodiment, one viewing activity starts when a channel is changed or the power supply of the device is turned on, and ends when the channel is changed next or the power supply is turned off. That is, in the case shown in FIG. 3, when the channel is switched from "CH0006" to "CH0008", a viewing log is generated, and the viewing log acquisition unit 102 acquires this viewing log information item.

Assume that a target content is a recorded content, and the content is to be played back from the beginning. In this case, the broadcast start time (for example, Sunday, September 22, 2013 at 21:00) is associated as a viewing start time, and the time (Sunday, September 22, 2013 at 21:10) obtained by adding the playback time (e.g., 10 min) of the content recorded at the viewing start time is associated as a viewing end time. This makes it possible to treat a viewing log information item of recorded contents in the same way as that of live contents.

In addition, assume that the viewer has not decided any program to be viewed and performs zapping, i.e., sequentially changing a channel every several seconds. In this case, a viewing log information item corresponding to zapping may be deleted by regarding channels during zapping as channels which have not been viewed. For example, the time from the viewing start time 302 to the viewing end time 303 is no more than a threshold, the corresponding activity may be determined as zapping, and the corresponding viewing log information item may be deleted.

The operation of the data analysis apparatus 100 according to this embodiment will be described next with reference to the flowchart of FIG. 4.

In step S401, the content information acquisition unit 101 acquires content information items relating to a plurality of target contents as analysis targets.

In step S402, the viewing log acquisition unit 102 acquires viewing log information items.

In step S403, the analysis unit 103 obtains viewing patterns by calculating the viewing states of the target contents for each identification number included in each of the viewing log information items.

In step S404, the viewing pattern totaling unit 104 obtains a totaling result by totaling the viewing patterns and the numbers of identification numbers respectively corresponding to the same viewing patterns.

The details of the analysis unit 103 will be described next with reference to the block diagram of FIG. 5.

The analysis unit 103 includes a viewing log information buffer 501, a distribution unit 502, a plurality of calculation processing units 503, and an integration unit 504. FIG. 5 shows an example including a calculation processing unit 503-1, a calculation processing unit 503-2, and a calculation processing unit 503-N (N is a natural number no less than 3). In addition, the calculation processing unit 503-1 includes a viewing log information subset buffer 505-1 and a content information buffer 506-1. The calculation processing unit 503-2 includes a viewing log information subset buffer 505-2 and a content information buffer 506-2. The calculation processing unit 503-N includes a viewing log information subset buffer 505-N and a content information buffer 506-N.

The viewing log information buffer 501 holds the viewing log information items acquired from the viewing log acquisition unit 102. Note that when holding the viewing log information items, the viewing log information buffer 501 may hold them upon sorting them according to identification number so as to allow them to be easily processed on the subsequent stage.

The distribution unit 502 receives the viewing log information items from the viewing log information buffers, generates viewing log information subsets by dividing the viewing log information items for each of the identification number, and distributes them to the respective calculation processing units.

Each viewing log information subset buffer 505 receives and holds viewing log information subsets relating to the same identification number from the distribution unit 502.

Each content information buffer 506 holds the content information items acquired from the content information acquisition unit 101.

Each calculation processing unit 503 obtains viewing patterns by calculating the viewing states of target contents relating to the identification number of the viewing log information subsets held in the viewing log information subset buffer 505. The respective calculation processing units 503 are units capable of performing parallel processing, and may be, for example, computers.

The integration unit 504 receives and integrates viewing patterns for each of identification number from each calculation processing unit 503.

More specifically, in the case of FIG. 5, all viewing log information subsets with the identification numbers "u0001" and "u0002" are distributed to the calculation processing unit 503-1 and are held in the viewing log information subset buffer 505-1. Likewise, all viewing log information subsets with the identification numbers "u0003" and "u0005" are distributed to the calculation processing unit 503-2, and all viewing log information subsets with the identification number "u0004" are distributed to the calculation processing unit 503-N.

Since an enormous volume of viewing log information items can be obtained from tens of thousands of viewers, such processing is parallelly performed to perform calculation processing for viewing states, thereby processing the enormous volume of viewing log information item at high speed and calculating the viewing states in a short period of time.

The details of analysis processing by the analysis unit 103, which is indicated by step S403, will be described next with reference to the flowchart of FIG. 6.

In step S601, the distribution unit 502 divides viewing log information items into viewing log information subsets for each identification number, and distributes the viewing log information subsets to the plurality of calculation processing units 503.

In step S602, each calculation processing unit 503 obtains viewing patterns by calculating the viewing states of target contents for the respective identification numbers of the viewing log information subsets.

In step S603, the integration unit 504 integrates the viewing patterns for each identification number calculated by each calculation processing unit 503 to generate a viewing pattern list as a list of viewing patterns.

Viewing state calculation processing by each calculation processing unit 503 in step S602 will be described next with reference to the flowchart of FIG. 7.

In step S701, identification number as a target for viewing state calculation processing is acquired as current identification number, and a viewing time variable which holds the viewing time of a target content is initialized with respect to the current identification number.

In step S702, it is determined whether or not there is any unprocessed viewing log information item (s) in each viewing log information subset buffer 505. If there is any unprocessed viewing log information item(s), the process advances to step S703. If there is no unprocessed viewing log information item(s), the process advances to step S708.

In step S703, a viewing log information item is loaded.

In step S704, it is determined whether or not the identification number of the viewing log information item loaded in step S703 matches the current identification number. If these identification numbers match each other, the process advances to step S705. If they do not match, the process advances to step S706.

In step S705, the viewing time variable of the target content is updated by using the viewing start time and the viewing end time of the loaded viewing log information item and the viewing channel. Note that when performing the processing for the first time, the viewing time variable may be directly updated without processing in step S704.

In step S706, the viewing state of the target content is determined relating to the current identification number. When determining a viewing state, for example, if the ratio of the viewing time variable to the broadcast time of the target content is higher than a threshold, it is determined that the target content has been viewed.

In step S707, since the identification number differs from the current identification number, the current identification number is updated to next identification number, and the viewing time variable is initialized.

In step S708, the viewing state of the target content is determined relating to the current identification number in the same manner as in step S706. With the above operation, the viewing state calculation processing is terminated.

The viewing state estimation processing in FIG. 7 can be parallelly performed by the respective calculation processing units 503 of the analysis unit 103, and each calculation processing unit 503 is only required to temporarily store data relating to the current identification number and the viewing time variable. Even if, therefore, the numbers of viewers and devices increase, no large-capacity memory is required.

The details of viewing time variable update processing in step S705 will be also described with reference to the flowchart of FIG. 8.

In step S801, it is determined whether or not the viewing time zone calculated from new viewing log information item falls within the broadcast time zone of the target content. The viewing time zone is the time zone from the viewing start time to the viewing end time. The broadcast time zone is the time zone from the broadcast start time to the broadcast end time of the target content. When determining whether or not the viewing time zone falls within the broadcast time zone, it may be determined that the viewing time zone falls within the broadcast time zone, if, for example, conditional expression (1) is satisfied.

$$(ch_u = ch_p)\,\&\,(et_u > st_p)\,\&\,(st_u < et_p) \qquad (1)$$

where $ch_u$ is the viewing channel of the viewing log information item, ch is the broadcast channel of the target content, $et_u$ is the viewing end time, et is the broadcast end time of the target content, $st_u$ is the viewing start time, and $st_p$ is the broadcast start time of the target content. That is, determination using expression (1) makes it possible to determine whether or not the viewing channel of the new viewing log information item coincides with the broadcast channel of the target content and the viewing time zone overlaps the broadcast time zone of the target content.

If the viewing time zone falls within the broadcast time zone, the process advances to step S802. If the viewing time zone falls outside the broadcast time zone, the processing in step S705 is terminated.

In step S802, a viewing time is calculated. The viewing time may be calculated by using equation (2).

$$dt = \min(et_u, et_p) - \max(st_u, st_p) \qquad (2)$$

With equation (2), it is possible to calculate a viewing time within a broadcast time except for the time during which a given content is continuously viewed before or after the broadcasting of the target content.

In step S803, the viewing time calculated in step S802 is added to the viewing time variable. With the above operation, the update processing in step S705 is terminated.

A specific example of viewing state determination processing by the calculation processing units 503 will be described next with reference to the viewing log information items shown in FIG. 9. The case of the calculation processing unit 503-1 in FIG. 5 will be described below.

The example shown in FIG. 9 is the viewing log information items held in the viewing log information subset buffer 505-1 of the calculation processing unit 503-1. In this case, viewing log information items with the identification numbers 301 "u0001" and "u0002" are held.

Initialized current identification number puid is set to "u0001" which is the identification number 301 of the first viewing log information item.

In addition, assume two dramas with content IDs 201 "p0001" and "p0002" shown in FIG. 2 are the respective target contents. The viewing time variables relating to "p0001" and "p0002" are initialized, and zeros are respectively substituted into the variables. In this case, the variables are respectively set as

$$dt[p0001] = 0$$

$$dt[p0002] = 0 \qquad (3)$$

Referring to FIG. 9, after the viewing log information item on the first row is loaded, the processing in step S705 in FIG. 7 is performed. In this case, the viewing end time "Sunday, September 22, 2013 at 20:58:24" is a time before the broadcast start time "Sunday, September 22, 2013 at 21:00" of the target content "p0001". Since the viewing time zone does not fall within the broadcast time zone, the value of the viewing time variable does not change, and the processing for the viewing log information item on the first row is complete. A viewing log information item on the second row is then loaded.

The viewing log information item on the second row does not satisfy the condition because the viewing channel differs from the channel of the target content. The processing for the viewing log information item on the second row is terminated. A viewing log information item on the third row is loaded.

Since the viewing channel of the viewing log information item on the third row coincides with the channel of the target content, and the viewing time zone falls within the broadcast time zone of the target content, the viewing time variable is updated. More specifically, 2,543 sec (42 min 23 sec) is calculated by subtracting the viewing start time "Sunday, September 22, 2013 at 21:14:56" from the viewing end time "Sunday, September 22, 2013 at 21:57:19", and the viewing time variable is updated to viewing time variable dt "p0001" = 2543.

When the viewing log information item with the identification number "u0002" is loaded by performing the same processing as described above, viewing determination is performed relating to the identification number "u0001". For example, expression (4) may be used to perform viewing determination.

$$\frac{dt[p0001]}{T[p0001]} > threshold \qquad (4)$$

In this case, the viewing time corresponding to the target content ID "p0001" of the identification number "u0001" is 2, 543 (sec), and the broadcast time corresponding to the target content ID "p0001" is 1 hour from the broadcast start time to the broadcast end time, i.e., 3,600 (sec). In this case, if the threshold is 0.5, since 2543/3600 = 0.71 > 0.5 according to expression (4), the viewing state is determined as "viewed".

After processing is complete for the identification number "u0001", the current identification number puid is updated to "u0002", and dt "p0002" is initialized to zero. Subsequently repeating similar processing makes it possible to determine the viewing state of each target content.

FIG. 10 shows an example of viewing patterns obtained in step S602.

FIG. 10 shows a viewing pattern 1001 representing a combination of the viewing states of target contents for each type of identification number 301 in the calculation processing unit 503-1. A viewing state is represented by a combination of the content ID 201 and a symbol indicating whether or not the content has been viewed. The symbol Y represents that the content has been viewed, and the symbol N represents that the content has not been viewed. FIG. 10 specifically shows a case in which a device of the identification number "u0001" has viewed both target contents "p0001" and "p0002", and a device of the identification number "u0002" has viewed the target content "p0001" but has not viewed "p0002".

FIG. 11 shows an example of the viewing pattern list generated in step S603.

FIG. 11 shows one list obtained by integrating combinations of the identification numbers 301 and the viewing patterns 1001 generated by the respective calculation processing units 503. That is, referring to the example shown in FIG. 5, the viewing patterns integrated include the viewing patterns indicated by the identification numbers "u0001" and "u0002" processed by the calculation processing unit 503-1, the viewing patterns indicated by the identification numbers "u0003" and "u0005" processed by the calculation processing unit 503-2, and the viewing pattern indicated by the identification number "u0004" processed by the calculation processing unit 503-N.

The details of the viewing pattern totaling unit 104 will be described next with reference to the block diagram of FIG. 12.

The viewing pattern totaling unit 104 includes a viewing pattern list buffer 1201, a distribution unit 1202, a plurality of calculation processing units 1203, and an integration unit 1204. The case shown in FIG. 12 includes a calculation processing unit 1203-1, a calculation processing unit 1203-2, and a calculation processing unit 1203-M (M is a natural number equal to or more than 3). In addition, the calculation processing unit 1203-1, the calculation processing unit 1203-2, and calculation processing unit 1203-M respectively include a viewing pattern list subset buffer 1205-1, a viewing pattern list subset buffer 1205-2, and a viewing pattern list subset buffer 1205-M.

The viewing pattern list buffer 1201 holds the viewing pattern list generated by the analysis unit 103.

The distribution unit 1202 receives the viewing pattern list from the viewing pattern list buffer 1201, and distributes all identification numbers relating to identical viewing patterns as viewing pattern list subsets to the respective viewing pattern list subset buffers 1205 based on the types of the viewing patterns.

Each viewing pattern list subset buffer 1205 receives and holds a viewing pattern list subset from the viewing pattern list buffer 1201. In this case, all of the viewing pattern list that has the viewing patterns "p0001: Y, p0002: Y" and "p0001: N, p0002: Y" is distributed to the calculation processing unit 1203-1. All of the viewing pattern list subset that has the viewing pattern "p0001: N, p0002: N" is distributed to the calculation processing unit 1203-2. All of the viewing pattern list that has the viewing pattern "p0001: Y, p0002: N" is distributed to the calculation processing unit 1203-M.

Each calculation processing unit 1203 calculates the total number of identification numbers corresponding to an identical viewing pattern for each viewing pattern held in the viewing pattern list subset buffer 1205.

The integration unit 1204 receives and integrates the total numbers of identification numbers for the respective viewing patterns from the respective calculation processing units 1203.

If viewing states vary little, it is not always necessary to perform parallel processing like that shown in FIG. 12. If, however, for example, the number of contents of input content information items is large, speeding up by distributed processing provides a beneficial effect.

The details of totaling processing by the viewing pattern totaling unit 104, which is indicated by step S404, will be described next with reference to the flowchart of FIG. 13.

In step S1301, the distribution unit 1202 rearranges the viewing pattern list by using the viewing patterns of the list as keys.

In step S1302, the distribution unit 1202 distributes the rearranged viewing pattern list to each calculation processing unit 1203 for each viewing pattern.

In step S1303, each calculation processing unit 1203 calculates the number of identification numbers for each viewing pattern.

In step S1304, the integration unit 1204 generates a totaling result by integrating the viewing patterns from the respective calculation processing units 1203 and the total numbers of identification numbers corresponding to identical viewing patterns.

Calculation processing for the number of identification numbers in step S1303 will be described next with reference to the flowchart of FIG. 14.

In step S1401, the current viewing pattern which is a viewing pattern as a processing target and a count variable to which the current viewing pattern belongs are initialized.

In step S1402, it is determined whether the viewing pattern list includes any unprocessed data. If the list includes unprocessed data, the process advances to step S1403. If the list includes no unprocessed data, the process advances to step S1408.

In step S1403, new data is loaded.

In step S1404, it is determined whether or not the viewing pattern of the new data matches the current viewing pattern. If they match each other, the process advances to step S1405. If they do not match, the process advances to step S1406.

In step S1405, the count variable is updated. In this embodiment, the value of the count variable is updated by adding 1 to the variable.

In step S1406, since the number of all identification numbers corresponding to an identical viewing pattern is calculated, the viewing pattern is associated with the value of the count variable.

In step S1407, the current viewing pattern is updated to a viewing pattern to be processed next, and the value of the count variable is initialized.

In step S1408, the viewing pattern is associated with the value of the count variable as in step S1406.

A specific example of totaling processing for viewing patterns by the viewing pattern totaling unit 104 will be described next with reference to the viewing log information items shown in FIG. 15.

The example shown in FIG. 15 is a list obtained by interchanging the identification numbers and viewing patterns of a viewing pattern list and rearranging the list using the viewing patterns as keys. For example, rows on which the viewing patterns are "p0001: Y, p0002: Y" appear together from the beginning of the data, and the viewing pattern list includes the identification number "u0001" and "u0003" associated with the corresponding viewing pattern. In this embodiment, subsequently, the viewing patterns "p0001: Y, p0002: N", "p0001: N, p0002: Y", and "p0001: N, p0002: N" appear together.

The viewing pattern totaling unit 104 initializes the current viewing pattern, and sets current viewing pattern ppid = "p0001: Y, p0002: Y" as a viewing pattern as a processing target. In addition, the viewing pattern totaling unit 104 initializes the count variable to zero.

Since the first data shown in FIG. 15 is identification number corresponding to the current viewing pattern, the value of the count variable is set to 1. Subsequently, the data on the second row is loaded. Since the data on the second row is the same viewing pattern as the current viewing pattern, the value of the count variable is updated to 2 by adding 1. In this manner, the value of the count variable is sequentially incremented as the viewing pattern remains the same.

In this case, if the viewing pattern of the newly loaded data is "p0001: Y, p0002: N", since this pattern differs from the current viewing pattern, the current viewing pattern "p0001: Y, p0002: Y" is associated with the value of the current count variable.

Subsequently, the current viewing pattern is updated to set current viewing pattern ppid = "p0001: Y, p0002: N". In addition, the value of the count variable is initialized to zero. The above processing may be repeated to perform totaling processing.

An example of the totaling result generated by the viewing pattern totaling unit 104 will be described next with reference to FIG. 16.

Referring to FIG. 16, viewing patterns 1601 are associated with identification number counts 1602, and the identification number counts 1602 indicate the total numbers of identification numbers corresponding to the respective viewing patterns. In this embodiment, if all the identification numbers are the IDs of viewers, 2,000 viewers have viewed both the target contents "p0001" and "p0002". In addition, 4,000 viewers have viewed only the target content "p0001" but have not viewed the target content "p0002", and 1,000 viewers have not viewed the target content "p0001" but have viewed the target content "p0002". Furthermore, 13,000 viewers have viewed neither of the two target contents.

(First Usage Example)

The first usage example of the data analysis apparatus 100 according to this embodiment will be described next with reference to FIG. 17.

Assume that as the first usage example, the content information items acquired by the content information acquisition unit 101 include an advertising program and a program as a main content. An advertising program is, for example, a program including a content associated with the main content, such as a video (review video) as a totaling of past broadcast contents relating to the main content or a preview video, which is broadcasted before the last episode of the main content planned to be broadcast.

The above analysis processing by the data analysis apparatus 100 will provide, as a totaling result, the number of viewers who have viewed both the advertising program and the main content, the number of viewers who have viewed only the advertising program, the number of viewers who have viewed only the main content, and the number of viewers who have viewed neither the advertising program nor the main content.

It is possible to evaluate, from these numbers of viewers, the ratio of the viewers who have viewed the advertising program and viewed the main content. In the case shown in FIG. 17, out of the 1,440 viewers who have viewed the advertising program, as many as 1,140 viewers have also viewed the main content. This information can be used to measure the effect of the advertising program.

(Second Usage Example)

The second usage example of the data analysis apparatus 100 according to this embodiment will be described next with reference to FIGS. 2, 16, 18, 19, 20, and 21.

The second usage example exemplifies so-called royalty analysis. In this case, the degree of royalty of viewers with respect to a quarterly drama series broadcast on Sunday at 21:00 is analyzed. Assume that the content information acquisition unit 101 has performed analysis processing upon acquisition of dramas A and B shown in FIG. 2 as target contents, and has obtained the information shown in FIG. 16 as a totaling result. FIG. 18 shows the totaling result shown in FIG. 16 in the form of a Venn diagram. Note that the result shown in FIG. 18 has been obtained without any consideration of the number of viewers who have viewed neither drama A nor drama B.

The totaling result concerns the last episode of drama A and the first episode of drama B. These dramas are broadcast on the same channel and same day of week in the same time zone but belong to different program series (different drama series). That is, the totaling result of these two target contents indicates a time zone loyalty which makes it possible to evaluate whether or not viewers have shifted to a drama in the same time zone.

FIG. 19 shows drama A and drama C which are subjected to analysis processing as another processing as target contents acquired by the content information acquisition unit 101. Assume that the same actor/actress in drama A and drama C, which are different drama series. FIG. 20 shows the totaling result obtained by analysis processing relating to drama A and drama C in FIG. 19. FIG. 21 shows the totaling result, shown in FIG. 20, in the form of a Venn diagram. This diagram indicates a starring actor/actress loyalty which makes it possible to evaluate whether or not viewers have shifted to a drama in which the same actor/actress. Note that the diagram shown in FIG. 21 gives no consideration to the number of viewers who have viewed neither drama A nor drama C.

Comparing FIGS. 18 and 21 makes it possible to calculate the ratio of viewers who have viewed both drama A and drama B which is a subsequent program in the same time zone, and the ratio of viewers who have viewed both drama A and drama C in which the same actor/actress. That is, it is possible to evaluate the loyalty of viewers to drama A.

In the second usage example, the ratio of viewers of drama A who have viewed drama B which is a subsequent program in the same time zone is 2000/6000 = 0.33, and the ratio of viewers who have viewed drama C in which the same actor/actress is 4500/6000 = 0.75. This indicates that the loyalty of the viewers of drama A to the starring actor/actress is high.

(Third Usage Example)

The third usage example of the data analysis apparatus 100 according to this embodiment will be described next with reference to FIGS. 22, 23, and 24.

The third usage example exemplifies a series viewing pattern analysis. Assume that the target contents acquired by the content information acquisition unit 101 are program series such as a drama series as shown in FIG. 22, and the first to last programs of the program series are acquired.

FIG. 23 shows the totaling result obtained by analysis processing performed by the data analysis apparatus 100 with respect to a total of 10 episodes of drama A shown in FIG. 22 as target contents.

FIG. 24 shows the totaling result in FIG. 23 in the form of a graph.

A left region 2401 in FIG. 24 displays viewing patterns in the form of blocks, with the shaded blocks indicating viewing by the viewers, and the blank blocks indicating non-viewing by the viewers. In addition, the horizontal direction indicates the number of episodes of the drama. In the case shown in FIG. 22, since the drama includes 10 episodes, the horizontal direction is represented by 10 blocks. That is, the blocks on each horizontal line represent a viewing pattern.

A right region 2402 in FIG. 24 indicates the frequency distribution of viewers corresponding to the respective viewing patterns in the left region 2401. Performing analysis processing for the drama series in this manner can enable evaluation of a tendency relating to the drama series; for example, a tendency that the largest number of viewers have viewed all the episodes of the drama series, the second largest number of viewers have viewed the last episode, and the third largest number of viewers have not viewed the first episode but have viewed the second to 10th episodes.

(Fourth Usage Example)

The fourth usage example of the data analysis apparatus 100 according to this embodiment will be described next with reference to FIGS. 25, 26, and 27.

The fourth usage example exemplifies an outflow/inflow analysis of contents. In the fourth usage example, with regard to two contents of interest, an evaluation is made relating to whether viewers have flown out to contents other than the contents of interest, or have flown in between the contents of interest from other contents.

FIG. 25 shows a case in which there are drama A of interest and five contents (programs A2 to A6) as so-called competing programs, which are contents in the same time zone as that of drama A but on different broadcast channels. That is, assume that content information items relating to competing programs between 21: 00 and 22: 00 on September 22, 2013 has been obtained.

On the other hand, FIG. 26 shows a case in which there are drama B of interest and five contents (programs B2 to B6) as competing programs which are contents in the same time zone as that of drama B. That is, assume that content information items relating to competing programs between 21:00 and 22:00 on October 6, 2013 has been obtained as in the case of FIG. 25.

It is possible to evaluate outflow/inflow from drama A to drama B by performing analysis processing between the respective contents including drama A, drama B, and programs B2 to B6 and calculating a totaling result relating to viewers.

When performing an outflow analysis, the content information acquisition unit 101 acquires drama A (also called the first program), drama B (also called the second program) to be compared with drama A, and competing programs (also called the third programs) of drama B as target contents in the form of combinations (drama A, drama B), (drama A, competing program B2), (drama A, competing program B3),..., (drama A, competing program B6), and performs analysis processing for the target contents. This indicates specific programs which the viewers, who viewed drama A on September 22, 2013, have viewed in the same time zone on October 6, 2013 after program renewal. It is therefore possible to evaluate how many viewers have flown out to the competing programs of drama B at the time of the shift from drama A to drama B.

On the other hand, when performing an inflow analysis, analysis processing is performed for drama A (also called the first program), drama B (also called the second program) to be compared with drama A, and competing programs (also called the third programs) of drama A as target contents in the form of combinations (drama A, drama B), (program A2, drama B), (program A3, drama B),..., (program A6, drama B). This indicates specific programs which the viewers, who viewed drama B on October 6, 2013, have viewed in the same time zone on September 22, 2013 before program renewal. It is therefore possible to evaluate how many viewers have flown in to drama B from the competing programs of drama A at the time of the shift from drama A to drama B.

FIG. 27 shows the inflow/outflow analysis result obtained by displaying the totaling result obtained in the fourth usage example using arrows to facilitate visual recognition. The upper portion in FIG. 27 indicates the numbers of viewers who have flown out to the other programs at the time of the shift from drama A to drama B. The lower portion in FIG. 27 indicates the numbers of viewers who have flown in from the other programs at the time of the shift from dram A to drama B. For example, it is obvious from FIG. 27 that out of 5,101 viewers who have viewed drama A, 724 viewers have viewed program B4 after program renewal. That is, a certain number of viewers have flown out to program B4. This makes it possible to grasp the outflow and inflow of viewers.

(Fifth Usage Example)

The fifth usage example of the data analysis apparatus 100 according to this embodiment will be described next with reference to FIGS. 28, 29, and 30.

The fifth usage example is an example of specifying specific viewer groups. It is assumed that in a viewing activity analysis, there is a demand for an analysis with respect to specific viewer groups. For example, there is a demand for specifying viewers relating to specific genres or performers like, for example, "viewers who like dramas", "viewers who like animations", and "viewers who like actor A", and analyzing which types of contents the viewers view. However, when specifying or researching "viewers who like dramas" and "viewers who like actor A", it is necessary to use questionnaire and the like, leading to a high cost.

In the fifth usage example, the viewing pattern totaling unit 104 of the data analysis apparatus 100 according to this embodiment can generate a specific viewing identification number list specifying a specific viewer group from viewing activities by extracting specific viewing identification number as identification number corresponding to specific viewing patterns. For example, the content information acquisition unit 101 acquires specific contents such as a plurality of dramas, and the viewing pattern totaling unit 104 extracts specific viewing identification number as identification number corresponding to specific viewing patterns, thereby obtaining a list of viewers who have viewed a plurality of dramas.

FIG. 28 shows an example of specific contents. In this example, in the genre of dramas, six dramas from different channels at different broadcast start times in a specific period are selected as target contents.

FIG. 29 shows an example of the list when the viewing pattern totaling unit 104 directly outputs identification number without counting the numbers of identification numbers. As shown in FIG. 29, it is possible to obtain a specific viewer identification number list by specifying viewing patterns and identification numbers belonging to the viewing patterns. In this case, it is possible to specify "viewers who like dramas", who check the first episodes of a plurality of dramas, by extracting a list of identification numbers of viewers who have viewed all six dramas from the obtained viewing patterns.

FIG. 30 shows a case in which contents are evaluated by using only the specific viewer identification numbers shown in FIG. 29.

FIG. 30 is a table associating content IDs 201, titles 202, specific viewer identification numbers 3001, and all identification numbers 3002. It is possible to estimate, from FIG. 30, "information program frequently viewed by viewers who like dramas" by obtaining the ratios of specific viewer identification numbers to the numbers of information programs viewed. In this case, since "information program X" is larger in the number of specific viewer identification numbers than "information program Y", it is possible to evaluate that information program X is an information program frequently viewed by the viewers who like dramas. This information can be used for subsequent marketing and the like.

The data analysis apparatus according to this embodiment described above can analyze the relationship among a plurality of contents as target contents by determining the viewing states of the contents and analyzing and totaling the viewing patterns of viewers or devices. Evaluating the relationship makes it possible to, for example, evaluate the effects and loyalties of advertising programs for the contents and specify viewers who have viewed specific programs.

The flowcharts of the embodiments illustrate methods and systems according to the embodiments. It should be understood that each block of the flowchart illustrations, and combinations of blocks in the flowchart illustrations, can be implemented by computer program instructions. These computer program instructions may be loaded onto a computer or other programmable apparatus to produce a machine, such that the instructions which execute on the computer or other programmable apparatus create means for implementing the functions specified in the flowchart block or blocks. These computer program instructions may also be stored in a computer-readable memory that can direct a computer or other programmable apparatus to function in a particular manner, such that the instructions stored in the computer-readable memory produce an article of manufacture including instruction means which implement the function specified in the flowchart block or blocks. The computer program instructions may also be loaded onto a computer or other programmable apparatus to cause a series of operational steps to be performed on the computer or other programmable apparatus to produce a computer programmable apparatus which provides steps for implementing the functions specified in the flowchart block or blocks.

While certain embodiments have been described, these embodiments have been presented by way of example only, and are not intended to limit the scope of the inventions. Indeed, the novel methods and systems described herein may be embodied in a variety of other forms; furthermore, various omissions, substitutions and changes in the form of the methods and systems described herein may be made without departing from the spirit of the inventions. The accompanying claims and their equivalents are intended to cover such forms or modifications as would fall within the scope and spirit of the inventions.

## Claims

**1.** A data analysis apparatus **characterized by** comprising:

a first acquisition unit (101) configured to acquire, for each of a plurality of target contents, a content information item including a broadcast time of one of the target contents and information which relates to a broadcast channel on which the one of the target contents is broadcasted;
a second acquisition unit (102) configured to acquire viewing log information items each including an identification number, a viewing time and a viewing channel, the identification number identifying a viewer or a device;
an analysis unit (103) configured to calculate a viewing state with the identification number for each of the target contents by using the content information item and the viewing log information items, and obtain a viewing pattern indicating a combination of viewing states of the target contents, each of the viewing states indicating whether or not each of the target contents has been viewed; and
a totaling unit (104) configured to total the viewing pattern by the numbers of identification numbers.

**2.** The apparatus according to claim 1, **characterized in that** the analysis unit (103) comprises,
a first distribution unit (502) configured to distribute viewing log information subsets obtained by dividing the viewing log information items for each of the identification numbers;
a plurality of first calculation processing units (503) configured to respectively calculate the viewing states relating to the plurality of target contents for each identification number included in the viewing log information subsets by using the viewing log information subsets; and
a first integration unit (504) configured to integrate the viewing states respectively calculated by the plurality of first calculation processing units (503).

3. The apparatus according to claim 1, **characterized in that** the totaling unit (104) comprises,
a second distribution unit (1202) configured to distribute viewing pattern subsets obtained by dividing the viewing patterns based on types of the viewing patterns;
a plurality of second calculation processing units (1203) configured to respectively calculate the numbers of identification numbers corresponding to the viewing pattern subsets by using the viewing pattern subsets; and
a second integration unit (1204) configured to integrate combinations of viewing patterns respectively calculated by the plurality of second calculation processing units and the numbers of identification numbers corresponding to the viewing patterns.

4. The apparatus according to claim 1, **characterized in that** the first acquisition unit (101) acquires, as the plurality of target contents, a program as a main content and an advertising program including a video associated with the main content.

5. The apparatus according to claim 1, **characterized in that** the first acquisition unit (101) acquires, as the plurality of target contents, at least two of programs which are identical in terms of channel, day of a week, and time zone but belong to different program series.

6. The apparatus according to claim 1, **characterized in that** the first acquisition unit (101) acquires, as the plurality of target contents, at least two of programs which have the same actor/actress but belong to different program series.

7. The apparatus according to claim 1, **characterized in that** the first acquisition unit (101) acquires, as the plurality of target contents, first to last programs associated with a program series.

8. The apparatus according to claim 1, **characterized in that** the first acquisition unit (101) acquires, as the plurality of target contents, a first program, a second program to be compared with the first program, and one or more third programs which are identical to the second program in terms of day of a week and time zone but differs in channel.

9. The apparatus according to claim 1, **characterized in that** the first acquisition unit (101) acquires, as the plurality of target contents, a first program, a second program to be compared with the first program, and one or more third programs which are identical to the first program in terms of day of a week and time zone but differs in channel.

10. The apparatus according to claim 1, **characterized in that** the totaling unit (104) extracts specific viewing identification number indicating identification number corresponding to a specific viewing pattern.

11. A data analysis method, comprising:

    acquiring, for each of a plurality of target contents, a content information item including a broadcast time of one of the target contents and information which relates to a broadcast channel on which the one of the target contents is broadcasted;
    acquiring viewing log information items each including an identification number, a viewing time and a viewing channel, the identification number identifying a viewer or a device;
    calculating a viewing state with the identification number for each of the target contents by using the content information item and the viewing log information items to obtain a viewing pattern indicating a combination of viewing states of the target contents, each of the viewing states indicating whether or not each of the target contents has been viewed; and
    totaling the viewing pattern by the numbers of identification numbers.

12. The method according to claim 11, further comprising, distributing viewing log information subsets obtained by dividing the viewing log information items for each of the identification numbers;
calculating the viewing states relating to the plurality of target contents for each identification number included in the viewing log information subsets by using the viewing log information subsets, respectively; and
integrating the viewing states respectively calculated.

13. The method according to claim 11, further comprising,
distributing viewing pattern subsets obtained by dividing the viewing patterns based on types of the viewing patterns;
calculating the numbers of identification numbers corresponding to the viewing pattern subsets by using the viewing pattern subsets, respectively; and
integrating combinations of viewing patterns respectively calculated by the plurality of second calculation processing units and the numbers of identification numbers corresponding to the viewing patterns.

**14.** The method according to claim 11, wherein the acquiring the content information item acquires, as the plurality of target contents, a program as a main content and an advertising program including a video associated with the main content.

**15.** The method according to claim 11, wherein the acquiring the content information item acquires, as the plurality of target contents, at least two of programs which are identical in terms of channel, day of a week, and time zone but belong to different program series.

**16.** The method according to claim 11, wherein the acquiring the content information item acquires, as the plurality of target contents, at least two of programs which have the same actor/actress but belong to different program series.

**17.** The method according to claim 11, wherein the acquiring the content information item acquires, as the plurality of target contents, first to last programs associated with a program series.

**18.** The method according to claim 11, wherein the acquiring the content information item acquires, as the plurality of target contents, a first program, a second program to be compared with the first program, and one or more third programs which are identical to the second program in terms of day of a week and time zone but differs in channel.

**19.** The method according to claim 11, wherein the acquiring the content information item acquires, as the plurality of target contents, a first program, a second program to be compared with the first program, and one or more third programs which are identical to the first program in terms of day of a week and time zone but differs in channel.

**20.** A computer readable medium including computer executable instructions, wherein the instructions, when executed by a processor, cause the processor to perform a method comprising:

acquiring, for each of a plurality of target contents, a content information item including a broadcast time of one of the target contents and information which relates to a broadcast channel on which the one of the target contents is broadcasted;
acquiring viewing log information items each including an identification number, a viewing time and a viewing channel, the identification number identifying a viewer or a device;
calculating a viewing state with the identification number for each of the target contents by using the content information item and the viewing log information items to obtain a viewing pattern indicating a combination of viewing states of the target contents, each of the viewing states indicating whether or not each of the target contents has been viewed; and
totaling the viewing pattern by the numbers of identification numbers.

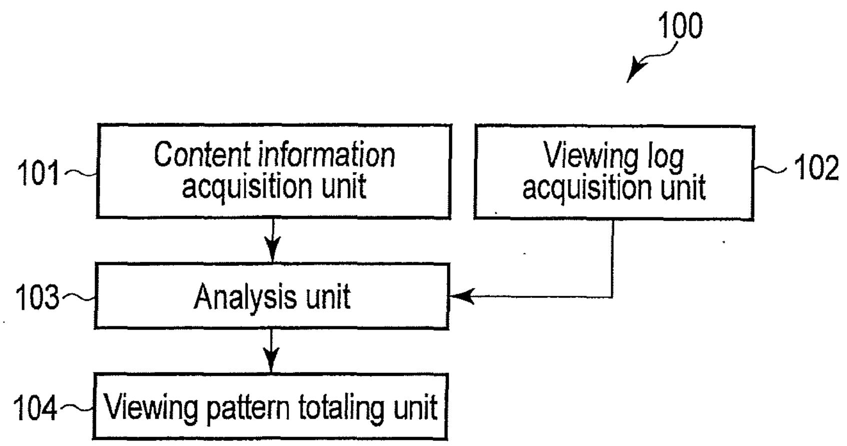


FIG. 1

201 202 203 204 205

| Content ID | Title | Broadcast start time | Broadcast end time | Broadcast channel |
|---|---|---|---|---|
| p0001 | Drama A | Sunday, September 22, 2013 at 21:00 | Sunday, September 22, 2013 at 22:00 | CH0006 |
| p0002 | Drama B | Sunday, October 6, 2013 at 21:00 | Sunday, October 6, 2013 at 22:00 | CH0006 |

206

FIG. 2

301 302 303 304

| Identification number | Viewing start time | Viewing end time | Viewing channel |
|---|---|---|---|
| u0001 | Sunday, September 22, 2013 at 20:45:00 | Sunday, September 22, 2013 at 20:58:24 | CH0006 |
| u0001 | Sunday, September 22, 2013 at 20:58:24 | Sunday, September 22, 2013 at 21:14:56 | CH0008 |
| u0001 | Sunday, September 22, 2013 at 21:14:56 | Sunday, September 22, 2013 at 21:57:19 | CH0006 |
| u0001 | Sunday, September 22, 2013 at 21:57:19 | Sunday, September 22, 2013 at 22:30:31 | CH0001 |
| u0001 | Sunday, October 6, 2013 at 21:00:13 | Sunday, October 6, 2013 at 21:50:27 | CH0006 |
| ... | ... | ... | ... |
| u0002 | Sunday, September 22, 2013 at 21:01:43 | Sunday, September 22, 2013 at 21:15:02 | CH0006 |
| u0002 | Sunday, September 22, 2013 at 20:15:02 | Sunday, September 22, 2013 at 21:16:00 | CH0004 |
| u0002 | Sunday, September 22, 2013 at 21:16:00 | Sunday, September 22, 2013 at 21:50:00 | CH0006 |
| u0002 | Sunday, October 6, 2013 at 19:00:00 | Sunday, October 6, 2013 at 20:21:31 | CH0010 |
| u0002 | Sunday, October 6, 2013 at 23:00:13 | Sunday, October 6, 2013 at 23:54:03 | CH0010 |
| ... | ... | ... | ... |

305

FIG. 3

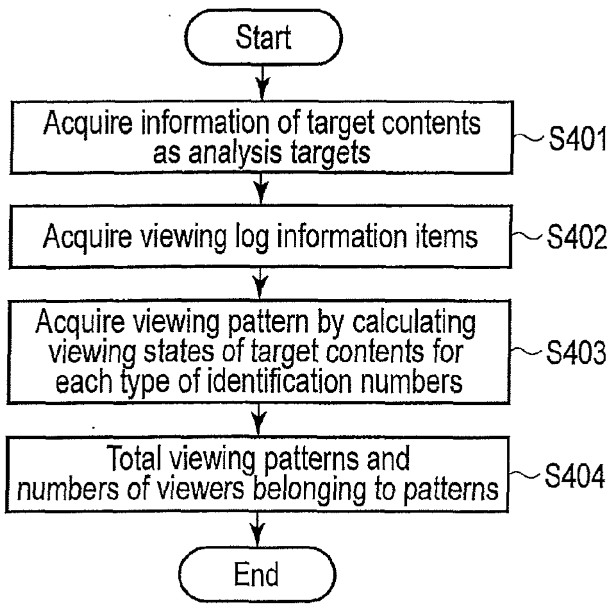


FIG. 4

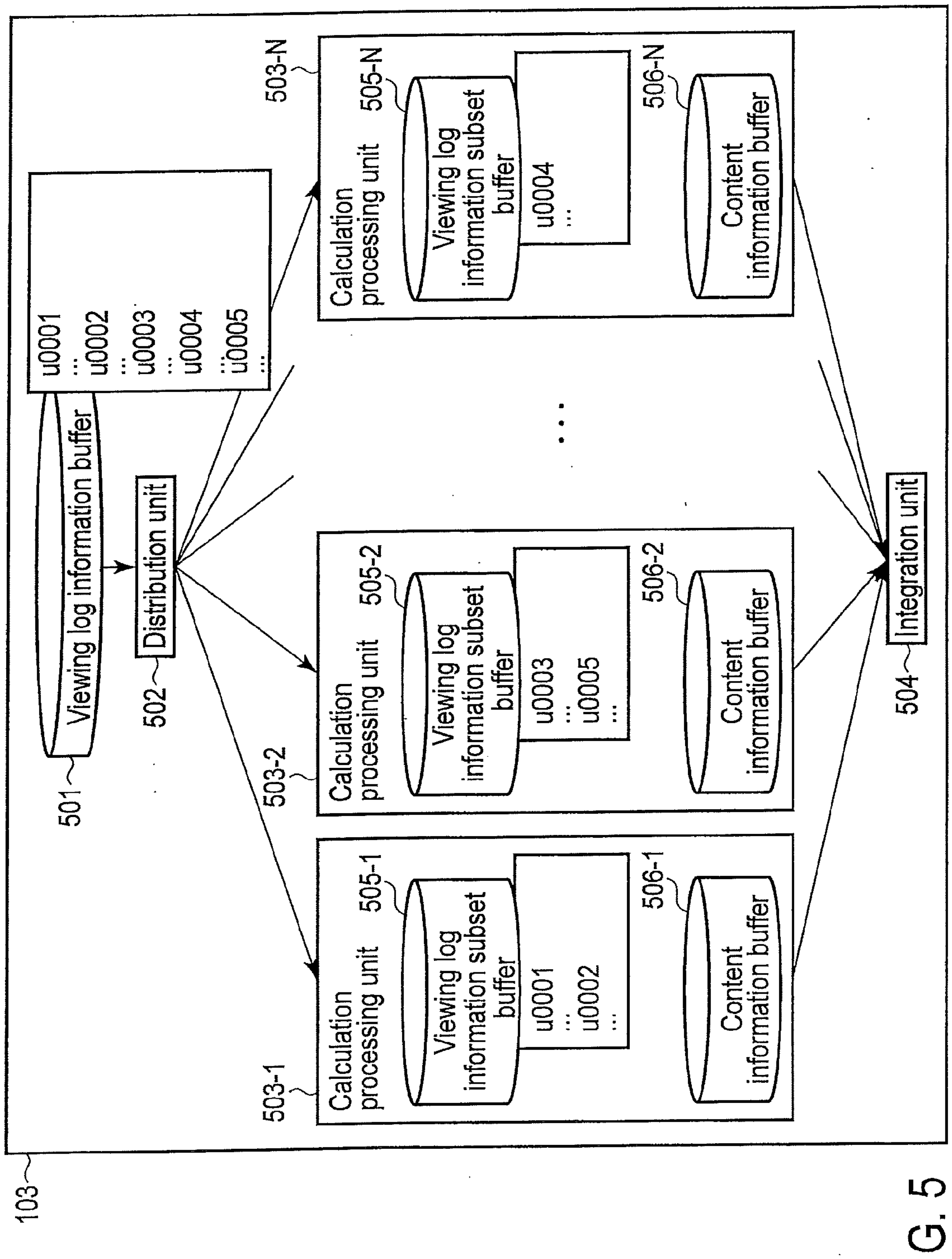
103
501
Viewing log information buffer
u0001
...
u0002
...
u0003
...
u0004
...
u0005
...
502
Distribution unit
503-1
Calculation processing unit
505-1
Viewing log information subset buffer
u0001
...
u0002
...
506-1
Content information buffer
503-2
Calculation processing unit
505-2
Viewing log information subset buffer
u0003
...
u0005
...
506-2
Content information buffer
503-N
Calculation processing unit
505-N
Viewing log information subset buffer
u0004
...
506-N
Content information buffer
504
Integration unit

F I G. 5

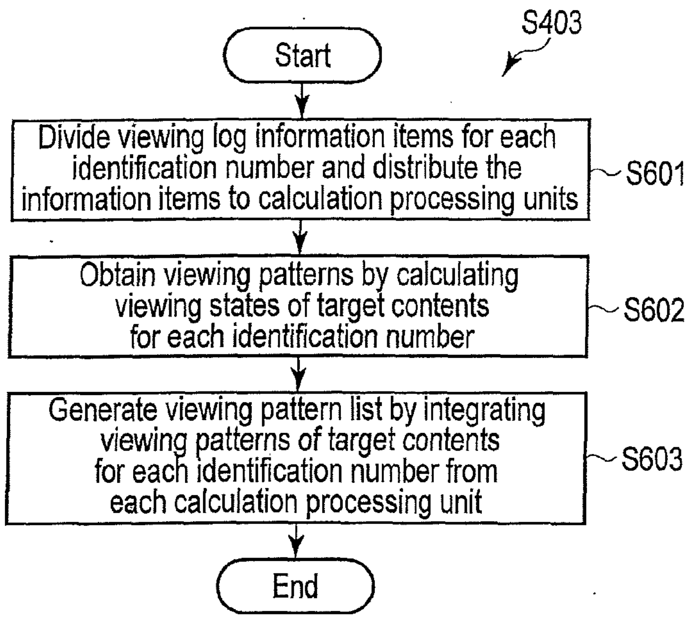
S403
Start
Divide viewing log information items for each identification number and distribute the information items to calculation processing units
S601
Obtain viewing patterns by calculating viewing states of target contents for each identification number
S602
Generate viewing pattern list by integrating viewing patterns of target contents for each identification number from each calculation processing unit
S603
End

FIG. 6

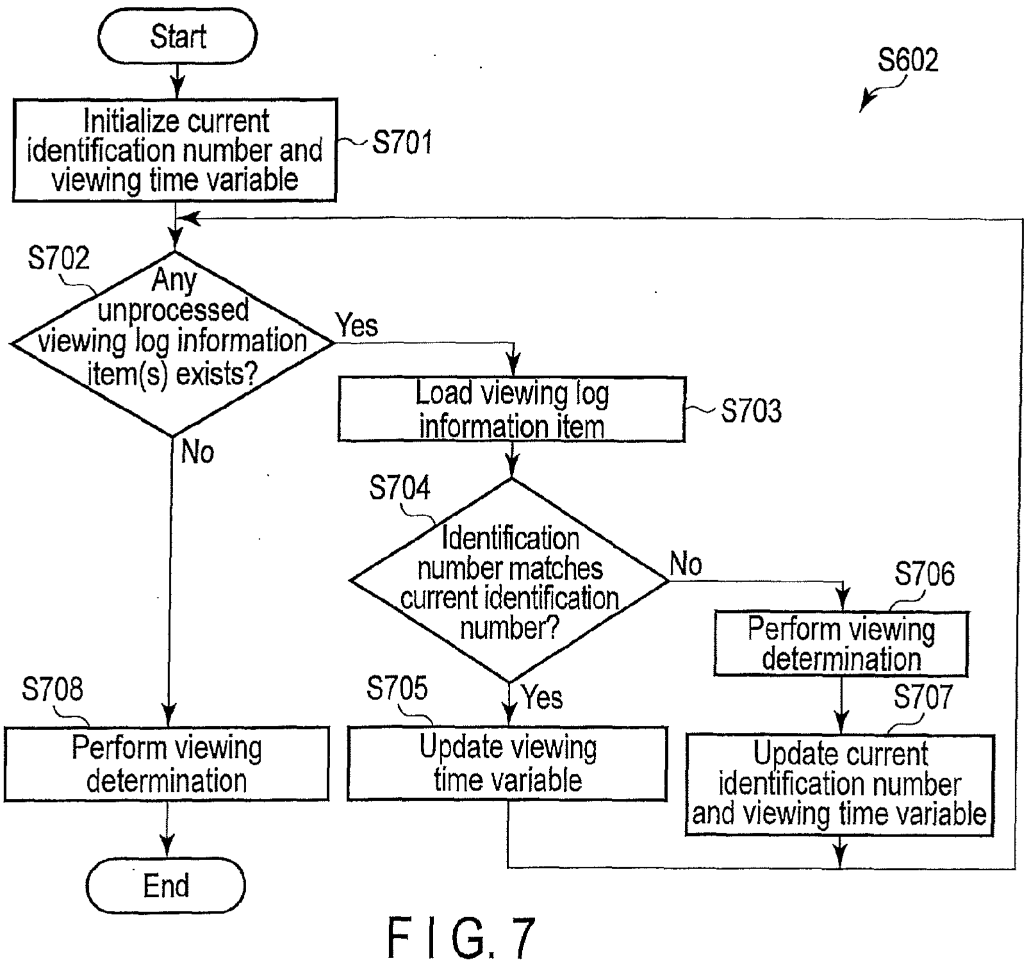
Start
S602
Initialize current identification number and viewing time variable
S701
S702
Any unprocessed viewing log information item(s) exists?
Yes
No
Load viewing log information item
S703
S704
Identification number matches current identification number?
No
Yes
S706
Perform viewing determination
S707
Update current identification number and viewing time variable
S705
Update viewing time variable
S708
Perform viewing determination
End

FIG. 7

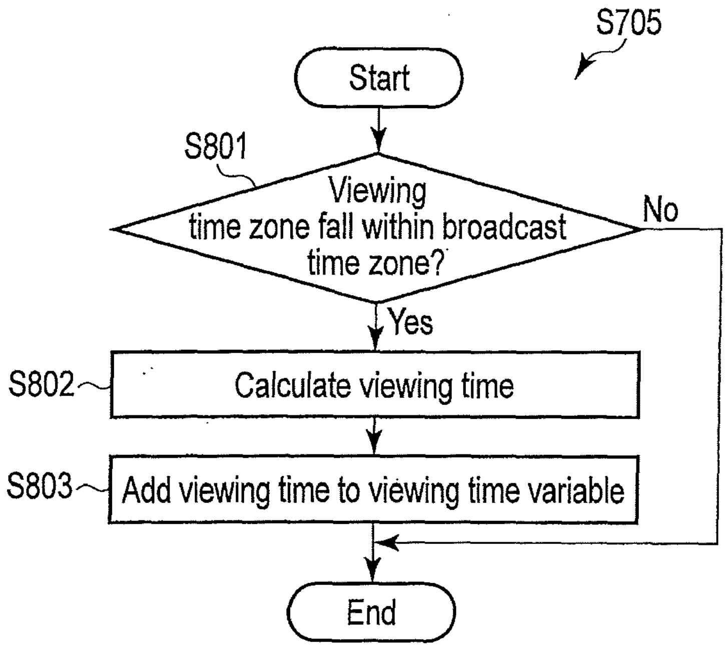


F I G. 8

301 302 303 304

| Identification number | Viewing start time | Viewing end time | Viewing channel |
|---|---|---|---|
| u0001 | Sunday, September 22, 2013 at 20:45:00 | Sunday, September 22, 2013 at 20:58:24 | CH0006 |
| u0001 | Sunday, September 22, 2013 at 20:58:24 | Sunday, September 22, 2013 at 21:14:56 | CH0008 |
| u0001 | Sunday, September 22, 2013 at 21:14:56 | Sunday, September 22, 2013 at 21:57:19 | CH0006 |
| u0001 | Sunday, September 22, 2013 at 21:57:19 | Sunday, September 22, 2013 at 22:30:31 | CH0001 |
| u0001 | Sunday, October 6, 2013 at 21:00:13 | Sunday, October 6, 2013 at 21:50:27 | CH0006 |
| u0002 | Sunday, September 22, 2013 at 21:01:43 | Sunday, September 22, 2013 at 21:15:02 | CH0006 |
| ... | ... | ... | ... |

F I G. 9

301 1001

| Identification number | Viewing pattern |
|---|---|
| u0001 | p0001:Y, p0002:Y |
| u0002 | p0001:Y, p0002:N |

FIG. 10

301 1001

| Identification number | Viewing pattern |
|---|---|
| u0001 | p0001:Y, p0002:Y |
| u0002 | p0001:Y, p0002:N |
| u0003 | p0001:Y, p0002:Y |
| u0004 | p0001:N, p0002:N |
| u0005 | p0001:N, p0002:Y |
| ... | ... |

FIG. 11

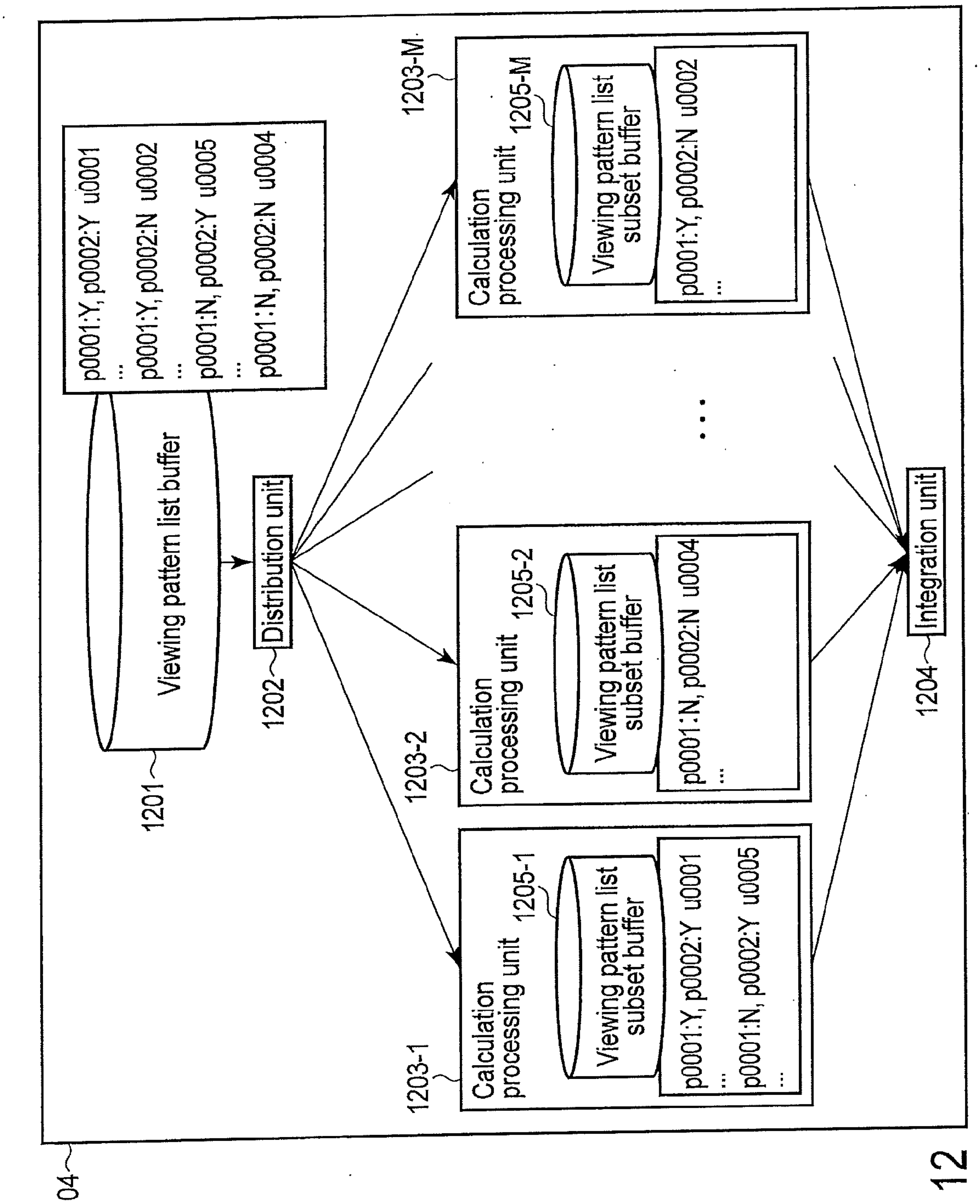
104
1201
Viewing pattern list buffer
p0001:Y, p0002:Y u0001
...
p0001:Y, p0002:N u0002
...
p0001:N, p0002:Y u0005
...
p0001:N, p0002:N u0004
1202
Distribution unit
1203-1
Calculation processing unit
1205-1
Viewing pattern list subset buffer
p0001:Y, p0002:Y u0001
...
p0001:N, p0002:Y u0005
...
1203-2
Calculation processing unit
1205-2
Viewing pattern list subset buffer
p0001:N, p0002:N u0004
...
1203-M
Calculation processing unit
1205-M
Viewing pattern list subset buffer
p0001:Y, p0002:N u0002
...
1204
Integration unit

FIG. 12

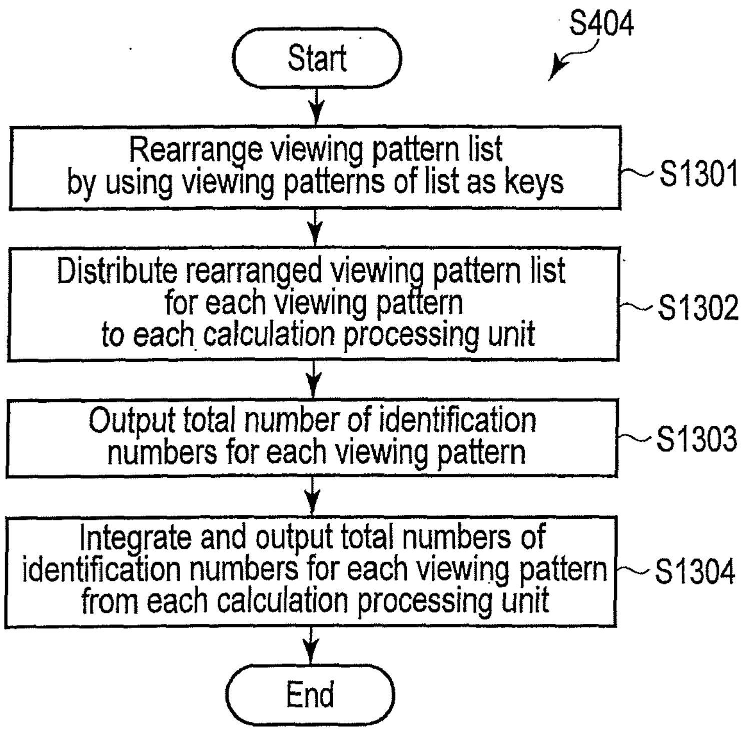
S404
Start
Rearrange viewing pattern list by using viewing patterns of list as keys
S1301
Distribute rearranged viewing pattern list for each viewing pattern to each calculation processing unit
S1302
Output total number of identification numbers for each viewing pattern
S1303
Integrate and output total numbers of identification numbers for each viewing pattern from each calculation processing unit
S1304
End

FIG. 13

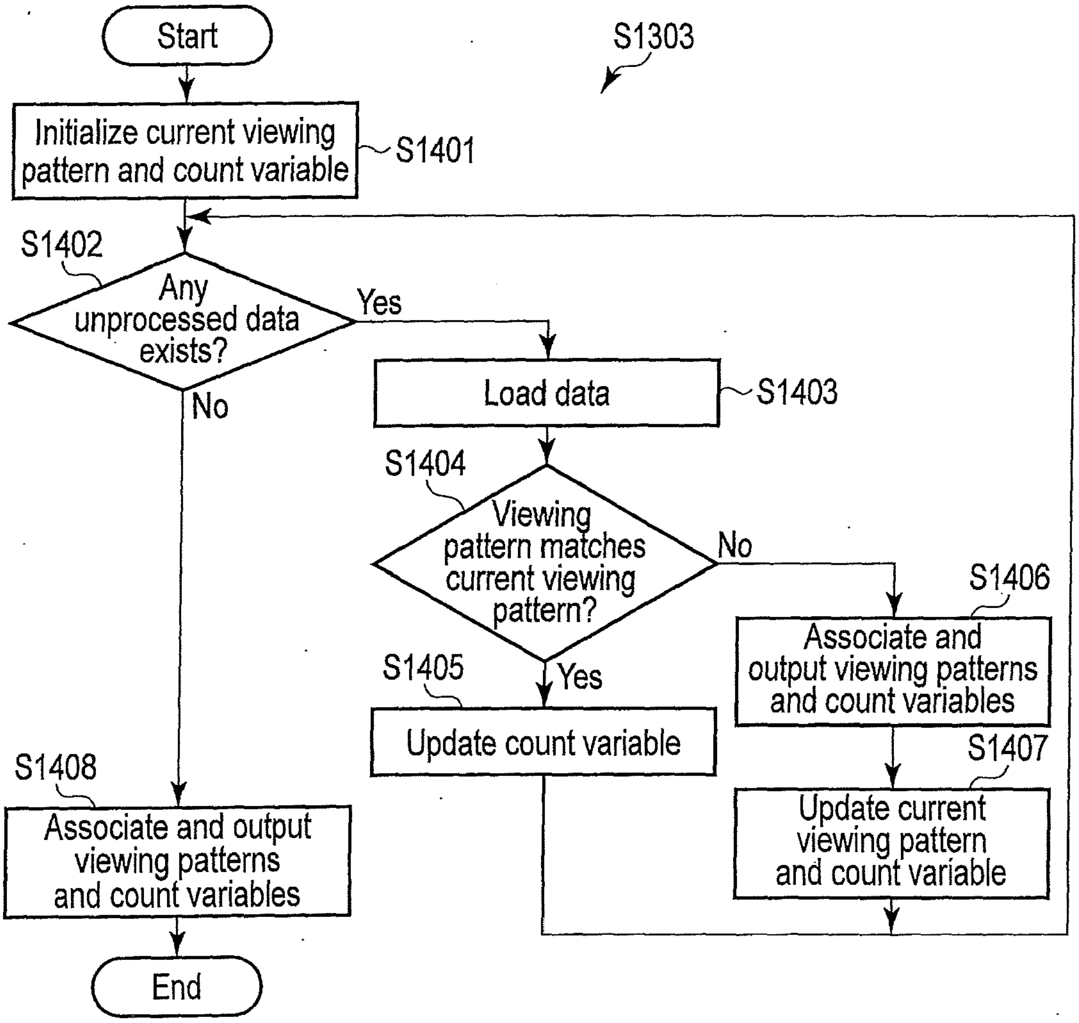

Start
S1303
Initialize current viewing pattern and count variable
S1401
S1402
Any unprocessed data exists?
Yes
No
Load data
S1403
S1404
Viewing pattern matches current viewing pattern?
No
S1406
Associate and output viewing patterns and count variables
S1405
Yes
Update count variable
S1407
Update current viewing pattern and count variable
S1408
Associate and output viewing patterns and count variables
End


FIG. 14

1001 301

| Viewing pattern | Identification number |
|---|---|
| p0001:Y, p0002:Y | u0001 |
| p0001:Y, p0002:Y | u0003 |
| ... | ... |
| p0001:Y, p0002:N | u0002 |
| ... | ... |
| p0001:N, p0002:Y | u0005 |
| ... | ... |
| p0001:N, p0002:N | u0004 |
| ... | ... |

FIG. 15

1601 1602

| Viewing pattern | Identification number count |
|---|---|
| p0001:Y, p0002:Y | 2000 |
| p0001:Y, p0002:N | 4000 |
| p0001:N, p0002:Y | 1000 |
| p0001:N, p0002:N | 13000 |

FIG. 16

Advertising program 2013 9/22 14:00-16:00
Main content (last episode) 2013 9/22 21:00-22:18

| | | Main content | |
|---|---|---|---|
| Advertising program | | Viewed | Not viewed |
| | Viewed | 1140 | 300 |
| | Not viewed | 4370 | 1000 |

FIG. 17

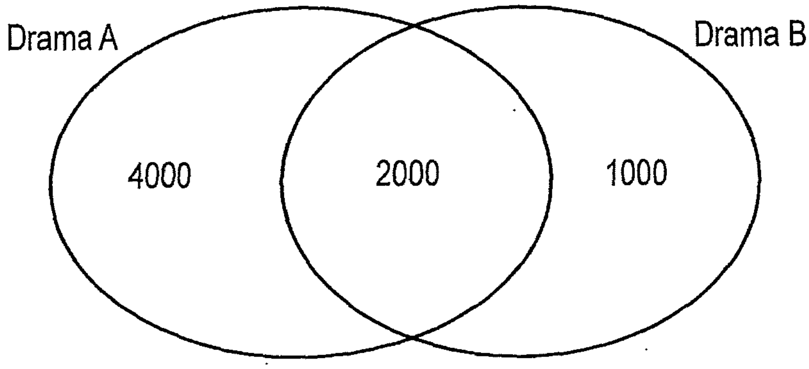


FIG. 18

201 202 203 204 205

| Content ID | Title | Broadcast start time | Broadcast end time | Broadcast channel |
|---|---|---|---|---|
| p0001 | Drama A | Sunday, September 22, 2013 at 21:00 | Sunday, September 22, 2013 at 22:00 | CH0006 |
| p0003 | Drama C | Tuesday, October 8, 2013 at 22:00 | Tuesday, October 8, 2013 at 23:00 | CH0005 |

FIG. 19

1601 1602

| Viewing pattern | Identification number count |
|---|---|
| p0001:Y, p0003:Y | 4500 |
| p0001:Y, p0003:N | 1500 |
| p0001:N, p0003:Y | 2000 |
| p0001:N, p0003:N | 12000 |

FIG. 20

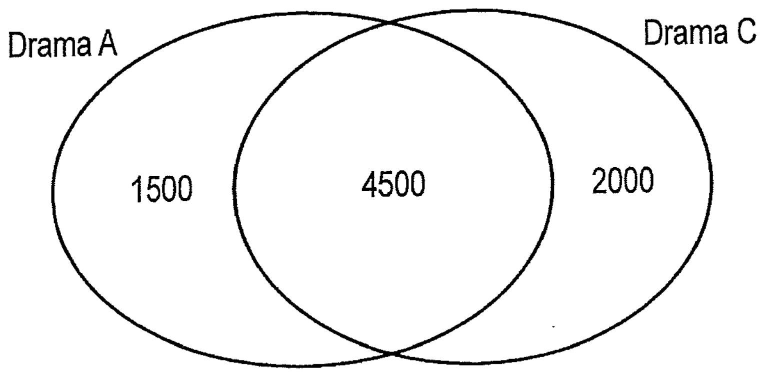


FIG. 21

201 202 203 204 205

| Content ID | Title | Broadcast start time | Broadcast end time | Broadcast channel |
|---|---|---|---|---|
| p0011 | First episode of drama A | Sunday, August 25, 2013 at 21:00 | Sunday, August 25, 2013 at 22:00 | CH0006 |
| p0012 | Second episode of drama A | Sunday, September 1, 2013 at 21:00 | Sunday, September 1, 2013 at 22:00 | CH0006 |
| p0013 | Third episode of drama A | Sunday, September 8, 2013 at 21:00 | Sunday, September 8, 2013 at 22:00 | CH0006 |
| p0014 | Fourth episode of drama A | Sunday, September 15, 2013 at 21:00 | Sunday, September 15, 2013 at 22:00 | CH0006 |
| p0015 | Fifth episode of drama A | Sunday, September 22, 2013 at 21:00 | Sunday, September 22, 2013 at 22:00 | CH0006 |
| | ... | | | |
| p0020 | Tenth episode of drama A | Sunday, September 29, 2013 at 21:00 | Sunday, September 29, 2013 at 22:00 | CH0006 |

FIG. 22

1601 1602

| Viewing pattern | Identification number count |
|---|---|
| p0011:Y, p0012:Y, p0013:Y, p0014:Y, p0015:Y, ··· ,p0020:Y | 1300 |
| p0011:N, p0012:N, p0013:N, p0014:N, p0015:N, ··· ,p0020:Y | 580 |
| p0011:N, p0012:Y, p0013:Y, p0014:Y, p0015:Y, ··· ,p0020:Y | 300 |
| ... | |

FIG. 23

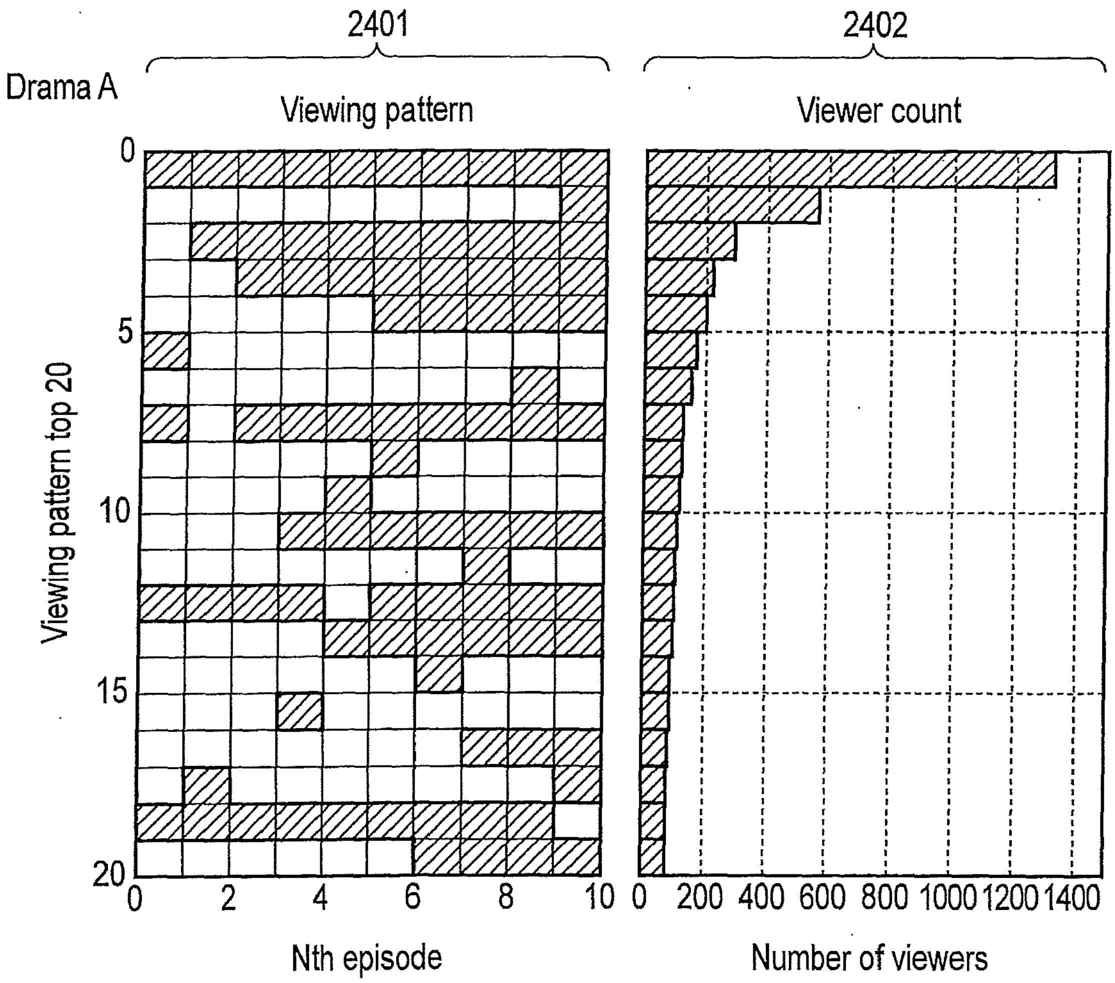

2401
2402
Drama A
Viewing pattern
Viewer count
0
5
10
15
20
Viewing pattern top 20
0
2
4
6
8
10
0
200
400
600
800
1000
1200
1400
Nth episode
Number of viewers


F I G. 24

201 202 203 204 205

| Content ID | Title | Broadcast start time | Broadcast end time | Broadcast channel |
|---|---|---|---|---|
| p00A1 | Drama A | Sunday, September 22, 2013 at 21:00 | Sunday, September 22, 2013 22:00 | CH0006 |
| p00A2 | Program A2 | Sunday, September 22, 2013 21:00 | Sunday, September 22, 2013 22:00 | CH0001 |
| p00A3 | Program A3 | Sunday, September 22, 2013 21:00 | Sunday, September 22, 2013 22:00 | CH0002 |
| p00A4 | Program A4 | Sunday, September 22, 2013 21:00 | Sunday, September 22, 2013 22:00 | CH0003 |
| p00A5 | Program A5 | Sunday, September 22, 2013 21:00 | Sunday, September 22, 2013 22:00 | CH0004 |
| p00A6 | Program A6 | Sunday, September 22, 2013 21:00 | Sunday, September 22, 2013 22:00 | CH0005 |

FIG. 25

201 202 203 204 205

| Content ID | Title | Broadcast start time | Broadcast end time | Broadcast channel |
|---|---|---|---|---|
| p00B1 | Drama B | Sunday, October 6, 2013 at 21:00 | Sunday, October 6, 2013 at 22:00 | CH0006 |
| p00B2 | Program B2 | Sunday, October 6, 2013 at 21:00 | Sunday, October 6, 2013 at 22:00 | CH0001 |
| p00B3 | Program B3 | Sunday, October 6, 2013 at 21:00 | Sunday, October 6, 2013 at 22:00 | CH0002 |
| p00B4 | Program B4 | Sunday, October 6, 2013 at 21:00 | Sunday, October 6, 2013 at 22:00 | CH0003 |
| p00B5 | Program B5 | Sunday, October 6, 2013 at 21:00 | Sunday, October 6, 2013 at 22:00 | CH0004 |
| p00B6 | Program B6 | Sunday, October 6, 2013 at 21:00 | Sunday, October 6, 2013 at 22:00 | CH0005 |

FIG. 26

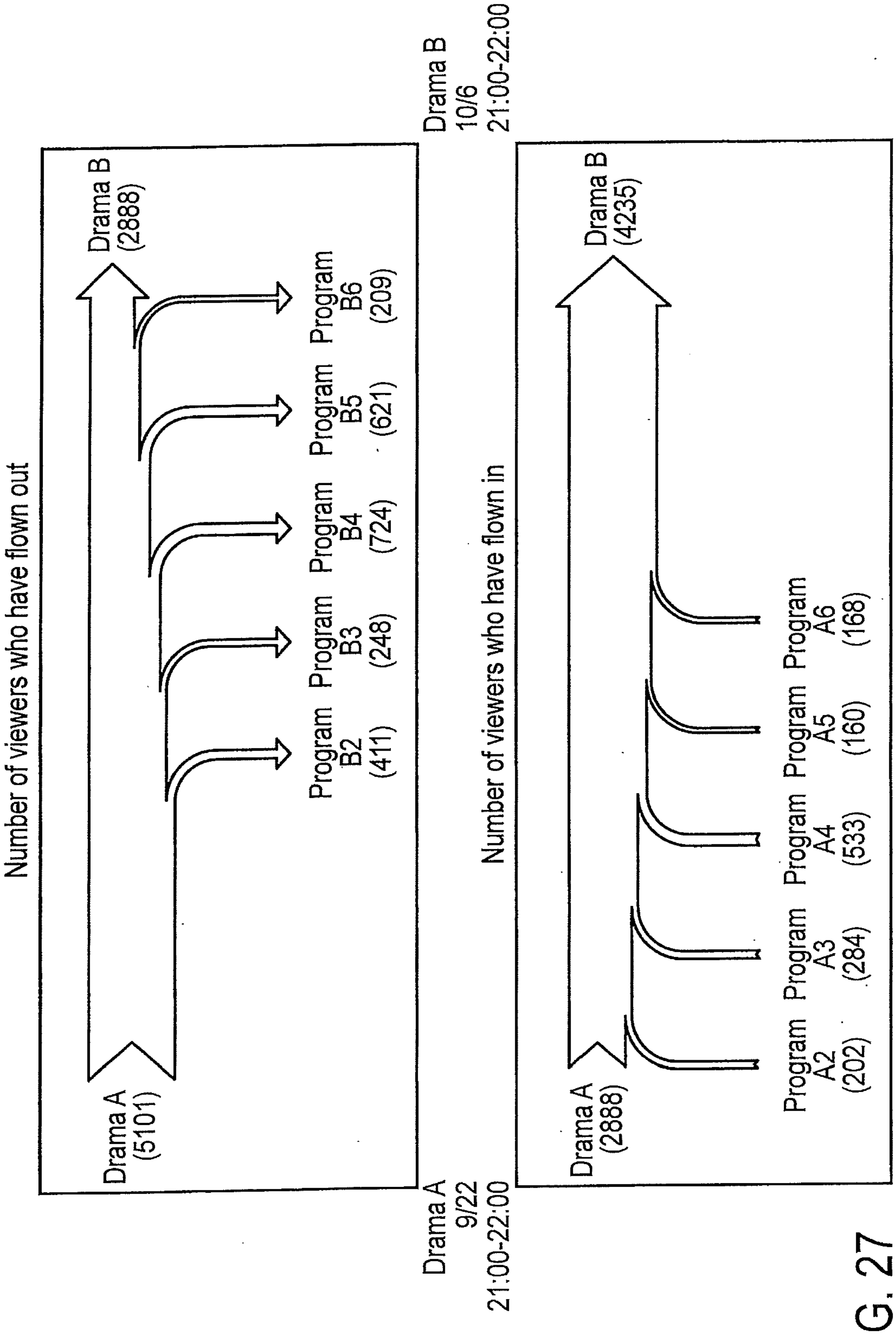
Number of viewers who have flown out
Drama A (5101)
Drama B (2888)
Program B2 (411)
Program B3 (248)
Program B4 (724)
Program B5 (621)
Program B6 (209)
Drama A 9/22 21:00-22:00
Drama B 10/6 21:00-22:00
Number of viewers who have flown in
Drama A (2888)
Drama B (4235)
Program A2 (202)
Program A3 (284)
Program A4 (533)
Program A5 (160)
Program A6 (168)

F I G. 27

201 202 203 204 205

| Content ID | Title | Broadcast start time | Broadcast end time | Broadcast channel |
|---|---|---|---|---|
| p00A1 | Drama B | Sunday, October 6, 2013 at 21:00 | Sunday, October 6, 2013 at 22:00 | CH0006 |
| p00D1 | Drama D | Monday, October 7, 2013 at 21:00 | Monday, October 7, 2013 at 22:00 | CH0004 |
| p00E1 | Drama E | Monday, October 7, 2013 at 22:00 | Monday, October 7, 2013 at 23:00 | CH0005 |
| p00F1 | Drama F | Wednesday, October 9, 2013 at 21:00 | Wednesday, October 9, 2013 at 22:00 | CH0005 |
| p00G1 | Drama G | Thursday, October 10, 2013 at 22:00 | Thursday, October 10, 2013 at 23:00 | CH0006 |
| p00H1 | Drama H | Friday, October 11, 2013 at 21:00 | Friday, October 11, 2013 at 22:00 | CH0001 |

FIG. 28

1001 301

| Viewing pattern | Identification number |
|---|---|
| p00A1:Y, p00D1:Y, p00E1:Y, p00F1:Y, p00G1:Y, p00H1:Y | u0100 |
| p00A1:Y, p00D1:Y, p00E1:Y, p00F1:Y, p00G1:Y, p00H1:Y | u0121 |
| ... | |

500 entries

FIG. 29

201 202 3001 3002

| Content ID | Title | Specific viewing identification number | All identification number |
|---|---|---|---|
| p000X | Information program X | 400 | 1000 |
| p000Y | Information program Y | 100 | 1000 |

FIG. 30

Europäisches Patentamt
European Patent Office
Office européen des brevets

# EUROPEAN SEARCH REPORT

Application Number
EP 15 15 2737

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2005/107110 A2 (VASUDEVAN DAMODARAN [US] ET AL) 10 November 2005 (2005-11-10) * the whole document * ----- | 1-20 | INV. H04N21/442 H04H60/64 H04N21/466 |
| A | US 7 240 355 B1 (ELDERING CHARLES A [US] ET AL) 3 July 2007 (2007-07-03) * the whole document * ----- | 1-20 | |
| A | US 2008/235348 A1 (DASGUPTA SUDEEP [US]) 25 September 2008 (2008-09-25) * the whole document * ----- | 1-20 | |

TECHNICAL FIELDS SEARCHED (IPC)

H04N
H04H

The present search report has been drawn up for all claims

2

| Place of search | Date of completion of the search | Examiner |
|---|---|---|
| Munich | 13 May 2015 | Willems, Brigitte |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

## ANNEX TO THE EUROPEAN SEARCH REPORT ON EUROPEAN PATENT APPLICATION NO. EP 15 15 2737

This annex lists the patent family members relating to the patent documents cited in the above-mentioned European search report.
The members are as contained in the European Patent Office EDP file on
The European Patent Office is in no way liable for these particulars which are merely given for the purpose of information.

13-05-2015

| Patent document cited in search report | Publication date | Patent family member(s) | Publication date |
|---|---|---|---|
| WO 2005107110 A2 | 10-11-2005 | CA 2563834 A1 | 10-11-2005 |
| | | US 2007157262 A1 | 05-07-2007 |
| | | US 2010211967 A1 | 19-08-2010 |
| | | US 2013152117 A1 | 13-06-2013 |
| | | US 2014208341 A1 | 24-07-2014 |
| | | WO 2005107110 A2 | 10-11-2005 |
| US 7240355 B1 | 03-07-2007 | US 7240355 B1 | 03-07-2007 |
| | | US 2007240181 A1 | 11-10-2007 |
| | | US 2010333125 A1 | 30-12-2010 |
| US 2008235348 A1 | 25-09-2008 | NONE | |

EPO FORM P0459

For more details about this annex : see Official Journal of the European Patent Office, No. 12/82